# EUROPEAN PATENT APPLICATION

(11) **EP 4 683 284 A1**
(43) Date of publication of application: **21.01.2026**
(21) Application number: 24784125.7
(22) Date of filing: 27.03.2024
(51) Int. Cl.: H04L 41/0668

(54) **DEVICE MANAGEMENT METHOD AND APPARATUS**

(30) Priority: 04.04.2023 CN 202310393625
(71) Applicant: HUAWEI TECHNOLOGIES CO., LTD., Shenzhen 518129 (CN)
(72) Inventor: LV, Chaoqun, Shenzhen, Guangdong 518129 (CN)
(74) Representative: Gill Jennings & Every LLP
(86) International application number: PCT/CN2024/083953
(87) International publication number: WO 2024/208040

(57) **Abstract**

Embodiments of this application provide a device management method and apparatus. The method is applied to a device management system. The device management system includes a first device, a second device, and at least one third device. The first device is configured to manage the second device and the at least one third device. The second device includes data backup of the first device. The method is performed by the second device or a device management apparatus disposed in the second device. The method includes: determining that the first device is in an abnormal state; and sending a first packet to the at least one third device, where the first packet indicates that the second device manages the at least one third device. According to the method provided in this application, after a management device and an edge device are disconnected, a data backup device is upgraded to the management device to continue to manage the edge device, to ensure that the edge device still has high-level autonomy when an edge and a cloud are disconnected.

## Description

This application claims priority to Chinese Patent Application No. 202310393625.8, filed with the China National Intellectual Property Administration on April 4, 2023 and entitled "DEVICE MANAGEMENT METHOD AND APPARATUS", which is incorporated herein by reference in its entirety.

### TECHNICAL FIELD

This application relates to the field of cloud services, and more specifically, to a device management method and apparatus.

### BACKGROUND

In a current device-edge-cloud synergy architecture, a central device may manage an edge device. However, there is a case in which a network between the central device and the edge device is weak and disconnected. After disconnection, in a current system, the edge device cannot be managed any more, or the edge device can only maintain a service that is currently running on a device and supports limited autonomy.

Therefore, how to enable the edge device to still have high-level autonomy when an edge and a cloud are disconnected, that is, how to deploy and manage a new service while maintaining normal running of an original service is a technical problem to be urgently resolved currently.

### SUMMARY

Embodiments of this application provide a device management method and apparatus, so that a data backup device can be configured to back up data of a management device, and after the management device and an edge device are disconnected, the data backup device is upgraded to the management device to continue to manage the edge device, to ensure that the edge device still has high-level autonomy when an edge and a cloud are disconnected.

According to a first aspect, a device management method is provided, applied to a device management system. The device management system includes a first device, a second device, and at least one third device. The first device is configured to manage the second device and the at least one third device. The second device includes data backup of the first device. The method is performed by the second device or a device management apparatus disposed in the second device. The method includes: determining that the first device is in an abnormal state; and sending a first packet to the at least one third device, where the first packet indicates that the second device manages the at least one third device.

According to the device management method provided in this embodiment of this application, the second device can back up data of the first device. After the first device is faulty or disconnected, the second device may be upgraded to the first device to replace the first device to manage the at least one third device, to ensure that an edge device still has high-level autonomy when an edge and a cloud are disconnected.

It should be understood that the edge and the cloud are the edge device and a central device, and the central device may manage the edge device. The first device, the second device, and the at least one third device may form an autonomous domain, that is, the device management system. In the autonomous domain, the first device is a designated node (designated node, DN), that is, manages another device in the autonomous domain. The second device is a backup designated node (backup designated node, BDN) and is configured to back up the DN, and the third device is a non-DN/BDN edge node (DN-Other). One autonomous domain includes one first device, one second device, and at least one third device. It should be understood that, in this application, a node and a device represent a same meaning.

It should be understood that, as a management device in the autonomous domain, the DN may perform creation, reading, updating, and deletion (create, read, update, delete, CRUD) on a device in the autonomous system.

For example, that the first device is in the abnormal state may include a case in which a network connection between the first device and another device is disconnected, a case in which the first device is faulty and cannot manage the second device and the third device, and the like.

For example, the second device may send the first packet to the at least one third device in a broadcast or multicast manner. This is not limited in this application. The first packet may be a hello packet, and the hello packet is usually used to discover a neighbor on a direct link and maintain a neighbor relationship. For example, bytes 10 to 12 in the first packet may represent the DN in this autonomous domain. For example, the bytes 10 to 12 in the first packet sent by the second device include an identifier (identity document, ID) of the second device, to notify a node that receives the first packet that the DN in this autonomous domain is the second device, so as to subsequently manage the third device.

Optionally, a string of bits in the first packet may alternatively be used to indicate that the second device is the DN. For example, each bit in "001000" corresponds to one device in the autonomous domain, a third bit corresponds to the second device, and the bit is "1", which indicates that the DN in this autonomous domain is the second device. A specific indication means should not be understood as a limitation on this application.

With reference to the first aspect, in some implementations of the first aspect, the method further includes: sending a second packet to the at least one third device, where the second packet indicates to elect a fourth device from the at least one third device, and the fourth device is configured to back up data of the second device.

It should be understood that, after the second device is upgraded to the DN in the device management system, the system needs to elect another device as the BDN, that is, elect the fourth device to back up the data of the current DN, that is, the second device.

For example, the second packet may be a hello packet, and bytes 16 to 20 of the second packet represent the BDN in this autonomous domain. For example, the bytes 16 to 20 may store an ID of the BDN in this autonomous domain. If the bytes are not empty, it indicates that this autonomous domain already has the BDN; and if the bytes are empty, it indicates that this autonomous domain has no BDN. If the bytes 16 to 20 in the second packet received by the third device are empty, it indicates that election of the BDN needs to be performed, that is, the fourth device needs to be elected to back up the data of the second device. Optionally, a string of bits in the second packet may alternatively be used to indicate election of the fourth device. For example, each bit in "000000" corresponds to one device in the autonomous domain. If each bit in the string of bits is "0", it indicates that the autonomous domain currently has no BDN, and election of the BDN needs to be performed, that is, the fourth device needs to be elected to back up the data of the second device.

According to the device management method provided in this embodiment of this application, after the second device is upgraded to the first device, the system may be indicated to re-elect a new data backup device, to ensure that another edge device in the system still has high-level autonomy after the second device is faulty.

With reference to the first aspect, in some implementations of the first aspect, the method further includes: synchronizing the data of the second device to the fourth device.

For example, the second device may synchronize management statuses and data of a task, an application, a node connection, and/or a resource to the fourth device. Optionally, a batch synchronization manner and/or an incremental synchronization manner may be used.

According to the device management method provided in this embodiment of this application, the fourth device may back up the data of the second device, to ensure that the fourth device can be upgraded to a new DN to manage another edge device in the system after the second device is faulty, and ensure that the another edge node still has high-level autonomy after the original DN is faulty.

With reference to the first aspect, in some implementations of the first aspect, the method further includes: determining that a first task is in an abnormal state, where the first task is executed by at least one application of at least one fifth device, and the fifth device is the second device or any one device in the at least one third device; and migrating or re-building the first task.

It should be understood that the DN may manage a status of a task in the system, and migrate or rebuild an abnormal task in the autonomous system based on the status of the task. For example, one task is executed by using a plurality of applications, and the plurality of applications may belong to a same device or may belong to a plurality of devices. When a task is in an abnormal state, the DN may migrate the task to a normal device or rebuild the task on a normal device. For example, the DN may start a corresponding application on the normal device and send data corresponding to the task to the application for execution.

In a possible implementation, the DN may manage a status of an application in the system, and migrate an abnormal application in the autonomous domain based on the status of the application, so that a task is not abnormal. For example, when a status of an application is abnormal, the DN may migrate application data to a normal device. For example, the DN may start a corresponding application on the normal device, and send data corresponding to the application to the corresponding application for execution.

According to the device management method provided in this embodiment of this application, when a node is deleted or a node is faulty in the device management system, service migration or rebuilding can be quickly performed, to ensure service continuity.

With reference to the first aspect, in some implementations of the first aspect, the method further includes: receiving a third packet from a sixth device, where the sixth device is the first device or any one device in the at least one third device, and the third packet indicates a network connection condition between the sixth device and the second device; and updating a network connection status of the second device based on the third packet.

For example, the third packet may be a hello packet. A designated bit in the third packet may represent the network connection condition between the sixth device and the second device, for example, a condition in which the sixth device and the second device are not connected, a condition in which a connection is established, or the like.

In some possible implementations, the connection status of the second device may include a disconnected state, an initial state, a connected state, or the like.

According to the device management method provided in this embodiment of this application, the second device may receive the third packet from another device in the system, and sense a connection status between the second device and the another device in real time.

With reference to the first aspect, in some implementations of the first aspect, updating the network connection status of the second device based on the third packet includes: if the third packet indicates that a connection is not established between the sixth device and the second device, updating the network connection status of the second device to the initial state; or if the third packet indicates that a connection is established between the sixth device and the second device, updating the network connection status of the second device to the connected state.

For example, the designated bit that is in the third packet and that represents the network connection condition between the sixth device and the second device is empty, it indicates that the connection is not established between the sixth device and the second device, and the network connection status of the second device is updated to the initial state. If the designated bit that is in the third packet and that represents the network connection condition between the sixth device and the second device includes the ID of the second device, it indicates that the connection is established between the sixth device and the second device, and the network connection status of the second device is updated to the connected state. Optionally, that a specific bit in the third packet is "0" or "1" may alternatively be used to indicate the network connection condition between the sixth device and the second device. A specific indication means is not limited in this application.

According to the device management method provided in this embodiment of this application, the second device may receive the third packet from the another device in the system, and sense the connection status between the second device and the another device in real time.

With reference to the first aspect, in some implementations of the first aspect, the method further includes: updating a connection status matrix of the second device based on the third packet, where the connection status matrix includes information of a network connection between the second device and the sixth device.

It should be understood that each device in the system stores a connection status matrix to indicate information of a network connection between this device and another device in the device management system. Optionally, the information of the network connection between the device and the another device in the device management system may be indicated in a form such as a connection status list, a bit string, or the like.

For example, the connection status matrix includes one row and N columns, and N elements in the N columns correspond to N devices in the system. In the connection status matrix of the second device, 0 may indicate that a connection is not established between a device corresponding to the element and the second device, and 1 may indicate that the connection is established between the device corresponding to the element and the second device.

For example, the designated bit that is in the third packet and that represents the network connection condition between the sixth device and the second device includes the ID of the second device. This indicates that the connection is established between the sixth device and the second device, and an element that is in the connection status matrix and that corresponds to the sixth device is updated to "1".

According to the device management method provided in this embodiment of this application, the second device may receive the third packet from the another device in the system, and sense the connection status between the second device and the another device in real time.

With reference to the first aspect, in some implementations of the first aspect, the method further includes: determining that the first device is recovered to a normal state, where the first device is a central device; synchronizing the data of the second device to the first device; and sending a fourth packet to the at least one third device, where the fourth packet indicates that the second device no longer manages the at least one third device.

It should be understood that the central device may be a center of a server cluster or may be a cloud device, and is configured to manage another device in the device management system. After the central device (the first device) is recovered to the normal state, the second device needs to transfer the administration to the first device.

It should be understood that, the second device may determine, by using local information such as a connection status matrix, a connection status table, or a bit string, that a connection is established between the first device and the second device, and consider that the first device is recovered to the normal state.

After a connection between the first device and another device in the system is recovered, the first device may become the BDN in the system. The second device may synchronize data to the first device, and then send the fourth packet to the another device in the system, to indicate that the second device no longer manages the another device in the system, that is, a DN identity of the second device is cleared. For example, bytes 10 to 12 in the fourth packet may represent the DN in this autonomous domain. If the bytes 10 to 12 in the fourth packet are empty, it indicates that the DN identity of the second device is cleared.

Optionally, the second device may send the fourth packet to another device in the system, to indicate that the first device becomes a new DN. For example, the bytes 10 to 12 in the fourth packet may represent the DN in this autonomous domain. If the bytes 10 to 12 include an ID of the first device, it indicates that the first device becomes the new DN.

According to the device management method provided in this embodiment of this application, after edge-cloud disconnection is recovered, a service/resource of the system may be re-managed by the central device, to ensure the administration of the central device.

With reference to the first aspect, in some implementations of the first aspect, a priority of the first device is higher than a priority of the second device, and the priority of the first device is higher than a priority of any third device in the at least one third device.

It should be understood that the priority may be referred to as a management priority or a backup priority. A priority of a device may be related to factors such as a geographical location and a computing capability of the device. The priority may be set by a user, or may be generated according to a specific rule.

According to the device management method provided in this embodiment of this application, a priority of the central device in the system is set to the highest, and after disconnection is recovered, the central device may quickly become the BDN and then be upgraded to the DN, to ensure the administration of the central device.

With reference to the first aspect, in some implementations of the first aspect, the priority of the second device is greater than or equal to the priority of any third device in the at least one third device.

It should be understood that the BDN in the system may be obtained through election. For example, bytes 16 to 20 of a packet represent the BDN of this autonomous domain. If corresponding bytes 16 to 20 in a packet received by the second device are empty, the second device adds the ID of the second device to the bytes 16 to 20 and then sends the packet to another device. If the bytes 16 to 20 in the packet received by the second device record an ID of another device, the priority of the second device is compared with a priority of the device recorded in the bytes 16 to 20. If the priority of the second device is higher than the priority of the device recorded in the bytes 16 to 20, an ID of the device recorded in the bytes 16 to 20 is replaced with the ID of the second device, and then the packet is sent to another device. After packet exchange is performed for a period of time, a non-DN device with the highest priority in the system becomes the BDN of the system. It should be understood that the DN does not participate in BDN election.

According to the device management method provided in this embodiment of this application, a device with a high priority may be selected as the BDN in the system, to ensure running stability of the system.

With reference to the first aspect, in some implementations of the first aspect, if a priority of a seventh device is equal to the priority of the second device, an ID value of the seventh device is less than an ID value of the second device, and the seventh device is any one device in the at least one third device.

For example, bytes 16 to 20 of a packet represent the BDN of this autonomous domain. If the bytes 16 to 20 in the packet received by the second device record an ID of another device, the priority of the second device is compared with a priority of the device recorded in the bytes 16 to 20. If the priority of the second device is equal to the priority of the device recorded in the bytes 16 to 20, the ID value of the second device is compared with an ID value of the device recorded in the bytes 16 to 20; and if the ID value of the second device is greater than the ID value of the device recorded in the bytes 16 to 20, the ID of the device recorded in the bytes 16 to 20 in the packet is replaced with the ID of the second device, and then the packet is sent to another device. Optionally, a replacement operation may alternatively be performed when the ID value of the second device is less than the ID value of the device recorded in the bytes 16 to 20. The replacement policy is merely an example, and should not be understood as a limitation on this application.

According to the device management method provided in this embodiment of this application, a device with a high priority and a large ID value may be selected as the BDN in the system, to ensure running stability of the system.

According to a second aspect, an embodiment of this application provides a device management apparatus. The device management apparatus includes units configured to implement any one of the first aspect or the possible implementations of the first aspect.

According to a third aspect, an embodiment of this application provides a device management apparatus. The device management apparatus includes a processor. The processor is configured to be coupled to a memory, and read and execute instructions and/or program code in the memory, to perform any one of the first aspect or the possible implementations of the first aspect.

According to a fourth aspect, a computing device cluster is provided and includes at least one computing device. Each computing device includes a processor and a memory. The processor of the at least one computing device is configured to execute instructions stored in the memory of the at least one computing device, to enable the computing device cluster to perform the method in any one of the first aspect or the possible implementations of the first aspect.

Optionally, the processor may be a general-purpose processor, and may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a fifth aspect, a computer program product including instructions is provided. When the instructions are run by a computing device cluster, the computing device cluster is enabled to perform the method in any one of the first aspect or the implementations of the first aspect.

According to a sixth aspect, a computer-readable storage medium is provided and includes computer program instructions. When the computer program instructions are executed by a computing device cluster, the computing device cluster performs the method in any one of the first aspect or the implementations of the first aspect.

For example, the computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

Optionally, in an implementation, the foregoing storage medium may be specifically a non-volatile storage medium.

### BRIEF DESCRIPTION OF DRAWINGS

FIG. 1 is a diagram of an edge-cloud synergy scenario according to an embodiment of this application;
FIG. 2 is a diagram of a system architecture of an ECAS according to an embodiment of this application;
FIG. 3 is a diagram of an architecture of a device management apparatus according to an embodiment of this application;
FIG. 4 is an example flowchart of a device management method according to an embodiment of this application;
FIG. 5 is an example flowchart of edge-cloud synergy running in a case in which an edge and a cloud are normally connected according to an embodiment of this application;
FIG. 6 is a diagram of an edge-cloud synergy running scenario in a case in which an edge and a cloud are normally connected according to an embodiment of this application;
FIG. 7 is an example flowchart of edge node autonomy in a case in which an edge and a cloud are disconnected according to an embodiment of this application;
FIG. 8 is a diagram of a scenario of edge node autonomy in a case in which an edge and a cloud are disconnected according to an embodiment of this application;
FIG. 9 is an example flowchart of recovering a connection between an edge and a cloud according to an embodiment of this application;
FIG. 10 is a diagram of a scenario in which an edge and a cloud are recovered to an initial connection state according to an embodiment of this application;
FIG. 11 is a diagram of a scenario in which data synchronization is performed after a connection between an edge and a cloud is recovered according to an embodiment of this application;
FIG. 12 is a diagram of a scenario in which a BDN is upgraded to a DN according to an embodiment of this application;
FIG. 13 is a diagram of a BDN election scenario according to an embodiment of this application;
FIG. 14 is an example flowchart of computation of a node connection status according to an embodiment of this application;
FIG. 15 is a diagram of an application scenario of computation of a node connection status according to an embodiment of this application;
FIG. 16 is an example flowchart of BDN election according to an embodiment of this application;
FIG. 17 is a block diagram of a device management apparatus according to an embodiment of this application;
FIG. 18 is a diagram of an architecture of a computing device according to an embodiment of this application;
FIG. 19 is a diagram of an architecture of a computing device cluster according to an embodiment of this application;
FIG. 20 is a diagram in which computing devices are connected via a network according to an embodiment of this application; and
FIG. 21 is a block diagram of a device management system according to an embodiment of this application.

### DESCRIPTION OF EMBODIMENTS

The following describes technical solutions of embodiments in this application with reference to accompanying drawings. Clearly, the described embodiments are some but not all of embodiments of this application. All other embodiments obtained by a person of ordinary skill in the art based on embodiments in this application without creative efforts shall fall within the protection scope of this application.

Aspects, embodiments, or features are presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" represent giving an example, an illustration, or a description. Any embodiment or design scheme described as an "example" should not be explained as being more preferred or having more advantages than another embodiment or design scheme. Exactly, the term "example" is intended to present a concept in a specific manner.

A service scenario described in embodiments of this application is intended to describe the technical solutions of embodiments of this application more clearly, and does not constitute a limitation on the technical solutions provided in embodiments of this application. A person of ordinary skill in the art may know: With evolution of the network architecture and emergence of new service scenarios, the technical solutions provided in embodiments of this application are also applicable to similar technical problems.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

In this application, "at least one" means one or more, and "a plurality of" means two or more. The term "and/or" describes an association relationship between associated objects and indicates that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In a current device-edge-cloud synergy architecture, there is a case in which a network between an edge node and a center/cloud is weak and disconnected. Once the network is disconnected, in a current system, the edge node cannot be managed, or the edge node can maintain only a service that is running on the current node and supports limited autonomy.

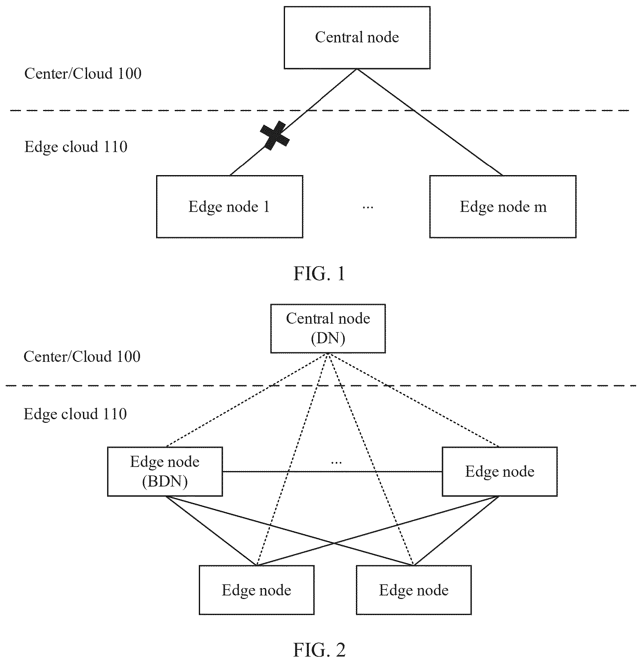

FIG. 1 is a diagram of an edge-cloud synergy scenario according to an embodiment of this application.

For example, a center/cloud 100 may be a server cluster or a cloud. The center/cloud 100 includes a central node (master node), and the central node may include one or more cloud nodes (cloud nodes). An edge cloud 110 includes an edge node (edge node) 1 to an edge node m, where m is an integer greater than or equal to 1. Optionally, a node in embodiments of this application may also be referred to as a device, a computer node, a computer device, or the like.

Before the central node and the edge node are disconnected, the central node may perform normal node management and application management on the edge node. Generally, a network between the central node and edge nodes is a weak network. There may be a case in which the central node and an edge node are disconnected. After disconnection, the central node has a problem in managing the edge node. In some edge-cloud synergy scenarios, for example, for robots or unmanned aerial vehicles, an edge needs to still have high-level autonomy when the edge and the cloud are disconnected. That is, the edge may deploy and manage a new service while maintaining normal running of an original service, may perform task-level running, may perform migration when an edge node is faulty, and/or may synchronize an edge-cloud status in a timely manner after the connection is recovered and be re-managed by a central cloud.

An embodiment of this application provides an edge-cloud-synergy high-level edge autonomy system (edge cloud autonomous system, ECAS). When an edge and a cloud are disconnected, an edge node still has high-level autonomy. For example, the edge node may deploy and manage a new service while maintaining normal running of an original service, may maintain task-level running, may perform migration when the edge node is faulty, and may synchronize an edge-cloud status in a timely manner after a connection is recovered and be re-managed by a central cloud.

FIG. 2 is a diagram of a system architecture of the ECAS according to an embodiment of this application.

A node in the center/cloud 100 is connected to a node in the edge cloud 110 via a dashed line. This indicates that a network between the central node and the edge node is a low-quality network (a low-quality link), and there is a possibility of disconnection. Nodes in the edge cloud 110 are connected via a solid line. This indicates that a network between the edge nodes is a high-quality network (a strong-quality link), and there is almost no possibility of disconnection. An ECAS apparatus is deployed on nodes in the center/cloud 100 and the edge cloud 110. A central node in the center/cloud 100 and edge nodes in the edge cloud 110 may form an autonomous domain system (autonomous domain system, AS), and the ECAS may include one or more ASs. A designated node (designated node, DN) and a backup designated node (backup designated node, BDN) exist in the ECAS. The DN is responsible for management of other nodes in the AS, and the BDN is responsible for backup of data of the DN.

An actual running process of the ECAS provided in this application includes: ECAS autonomy in an edge-cloud normal connection running state, autonomous management of a node resource, an application, a task, and the like, ECAS autonomy in an edge-cloud link fault state, autonomous management of the node resource, the application, and the task, and ECAS autonomy in a connection recovery state.

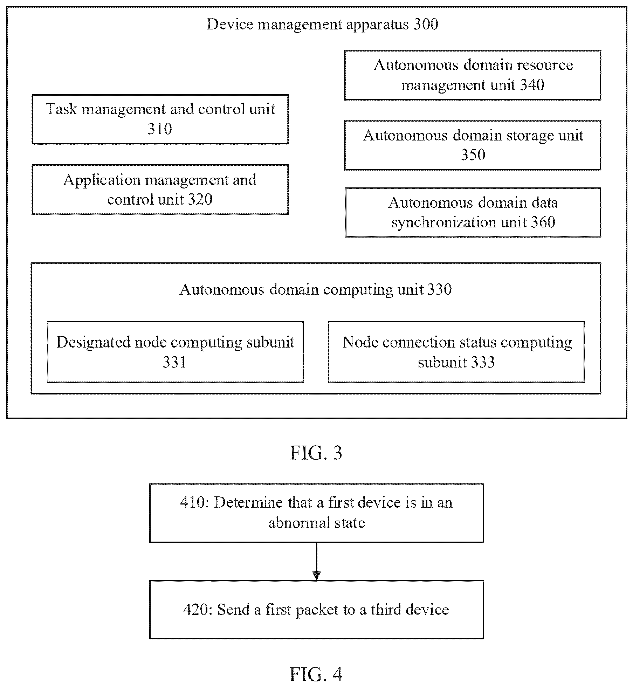

FIG. 3 is a diagram of an architecture of a device management apparatus according to an embodiment of this application. The device management apparatus 300 is the foregoing ECAS apparatus.

The device management apparatus 300 includes a task management and control unit 310, an application management and control unit 320, an autonomous domain computing unit 330, an autonomous domain resource management unit 340, an autonomous domain storage unit 350, and an autonomous domain data synchronization unit 360. The autonomous domain computing unit 330 includes a designated node computing subunit 331 and a node connection status computing subunit 333. It should be understood that only a node elected as the DN can run the task management and control unit 310, the application management and control unit 320, and the autonomous domain resource management unit 340, and only a node elected as the DN or the BDN can run the autonomous domain data synchronization unit 360.

In this embodiment of this application, a service is basically equivalent to an application, and one task includes at least one service or application.

The task management and control unit 310 manages a task and a task status, and reschedules an abnormal task in an autonomous domain according to an application deployment policy of the task based on the task status.

The application management and control unit 320 manages an application and an application status; migrates or rebuilds an abnormal application in the autonomous domain based on the application status; and receives a create, read, update, and delete (create, read, update, delete, CRUD) request of a new application, for example, adds a new application, updates an application, reads specific information of an application, and deletes an application.

The designated node computing subunit 331 is responsible for node election, elects a DN and/or a BDN, and notifies the BDN and another non-DN/BDN edge node (DN-Other) when the DN is faulty. In a normal case, the DN is not switched, and the DN is switched to the central node only after the central node is recovered.

The node connection status computing subunit 333 is responsible for maintaining a connection status of nodes in the autonomous domain.

The autonomous domain resource management unit 340 is responsible for autonomous domain management, including autonomous domain CURD, that is, performing CURD on the autonomous domain, and autonomous domain node CURD (the central node is in the autonomous domain by default), that is, performing CURD on a node in the autonomous domain. Autonomous domain node information includes an identifier (identity document, ID) of a node in the autonomous domain and priority information of the node.

The autonomous domain storage unit 350 stores an autonomous domain task and application management data and status, and stores a node connection status, a DN/BDN status, resource data, and the like.

An autonomous domain data synchronization unit 360 synchronizes task management data and a task status; synchronizes application management data and an application status; synchronizes node connection status data; and synchronizes resource management data in the autonomous domain.

FIG. 4 is an example flowchart of a device management method according to an embodiment of this application.

410: Determine that a first device is in an abnormal state.

It should be understood that a device management system includes the first device, a second device, and at least one third device. The first device is a DN of an autonomous domain and is configured to manage the second device and the at least one third device. The second device is a BDN of the autonomous system and is configured to back up data of the first device. The third device is a non-DN and non-BDN edge node.

It should be understood that the first device may be a central node, or may be an edge node.

For example, that the first device is in the abnormal state may include a case in which a network connection between the first device and another device is disconnected, a case in which the first device is faulty and cannot manage the second device and the third device, and the like.

420: Send a first packet to the third device.

The first packet indicates that the second device manages the at least one third device. For example, the second device may send the first packet to the at least one third device in a broadcast or multicast manner. This is not limited in this application. The first packet may be a hello packet, and the hello packet is usually used to discover a neighbor on a direct link and maintain a neighbor relationship. For example, bytes 10 to 12 in the first packet may represent the DN in this autonomous domain. For example, the bytes 10 to 12 in the first packet sent by the second device include an identifier (identity document, ID) of the second device, to notify a node that receives the first packet that the DN in this autonomous domain is the second device, so as to subsequently manage the third device.

Optionally, a string of bits in the first packet may alternatively be used to indicate that the second device is the DN. For example, each bit in "001000" corresponds to one device in the autonomous domain, a third bit corresponds to the second device, and the bit is "1", which indicates that the DN in this autonomous domain is the second device. A specific indication means should not be understood as a limitation on this application.

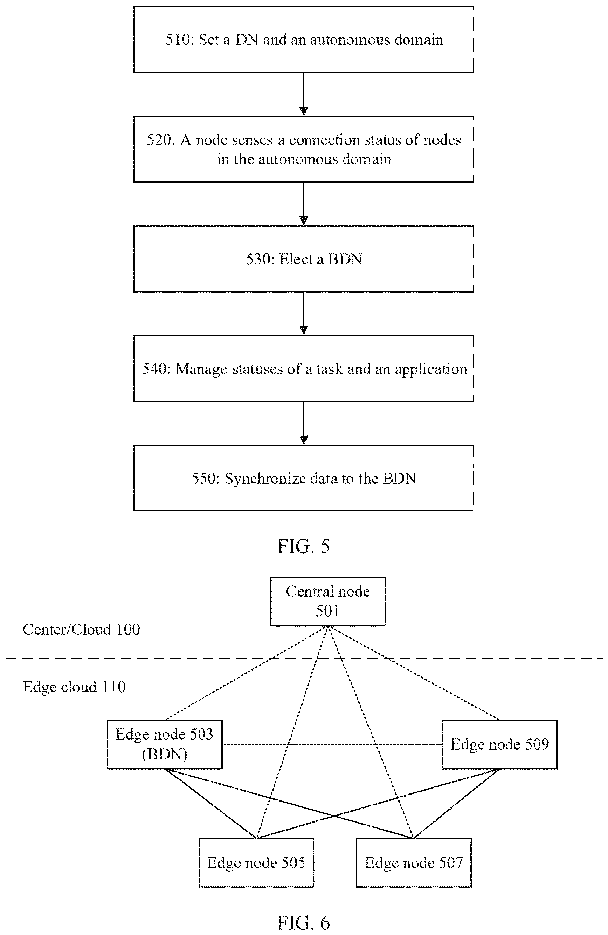

FIG. 5 is an example flowchart of edge-cloud synergy running in a case in which the edge and the cloud are normally connected according to an embodiment of this application. FIG. 6 is a diagram of an application scenario corresponding to FIG. 5. The center/cloud 100 includes a central node 501, and the edge cloud 110 includes an edge node 503, an edge node 505, an edge node 507, and an edge node 509.

510: Set the DN and the autonomous domain.

The ECAS apparatus is deployed on the central node 501, the central node 501 is set to be the DN, an autonomous domain ASx is created by using the autonomous domain resource management unit 340, and the central node 501, the edge node 503, the edge node 505, the edge node 507, and the edge node 509 are added to the autonomous domain ASx. The central node 501 may automatically complete ECAS deployment of a node that is newly added to the autonomous domain ASx, that is, deploy a high-quality network between the edge nodes and a low-quality network between the central node and the edge nodes as shown in FIG. 6.

520: A node senses a connection status of nodes in the autonomous domain.

The ECAS on each node (including the central node and the edge nodes) continuously advertises a connection status to each other by using the autonomous domain computing unit 330, and each node continuously senses the connection status of the nodes in the autonomous domain.

530: Elect the BDN.

The autonomous domain computing unit 330 of a non-DN node in the autonomous domain ASx performs BDN election, and completes BDN election from candidate nodes according to a preset rule. For example, the preset rule may be that a node with a high priority is preferentially elected as the BDN, and when priorities are the same, a node with a large ID value is preferentially elected as the BDN.

For example, the edge node 503 is the BDN obtained through election. After election is completed, a status of the autonomous domain enters a connected running state.

540: Manage statuses of a task and an application.

The task management and control unit 310 and the application management and control unit 320 of the DN respectively perform task management and application management in the autonomous domain, deploy a task-related application or an application to a node in the autonomous domain ASx, and manage the statuses of the task and the application.

550: Synchronize data to the BDN.

The autonomous domain data synchronization unit 360 of the DN synchronizes management statuses and data of a task, an application, a node connection, and/or a resource to the BDN. For example, a batch synchronization manner and/or an incremental synchronization manner may be used.

When the edge and the cloud are normally connected, that is, when a network connection between the central node 501 and the edge nodes in the edge cloud 110 is normal, node fault includes the following two cases.

Case (1): A non-BDN node in the autonomous domain is faulty. If an abnormal state of a task is detected by the task management and control unit 310 of the DN, an application associated with the task may be migrated or rebuilt to another node. If an abnormal state of an application is detected by the application management and control unit 320 of the DN, the application may be migrated or rebuilt to another node. For example, if an application of a faulty node is in the abnormal state, the DN may start a corresponding application on a normal device (a non-faulty node), and send data corresponding to the application of the faulty node to the application of the normal device for execution.

Case (2): The BDN in the autonomous domain is faulty, and the autonomous domain computing unit 330 re-elects the BDN from the candidate nodes. The candidate nodes include a non-DN and non-BDN node in the autonomous domain. If the abnormal state of the task is detected by the task management and control unit 310 of the DN, the application associated with the task is migrated or rebuilt to the another node. If the abnormal state of the application is detected by the application management and control unit 320, the application is migrated or rebuilt to the another node. The autonomous domain data synchronization unit 360 of the DN synchronizes the management statuses and data of the task, the application, the node connection, and/or the resource to a new BDN.

In some possible implementations, if an abnormal state of an application of a faulty node is detected by the DN, and fault of the faulty node does not affect running of another application on the faulty node, the application may be migrated or rebuilt to another application of the faulty node.

When the edge and the cloud are normally connected, node deletion includes the following two cases.

Case (1): The DN deletes a non-BDN node in the autonomous domain by using the autonomous domain resource management unit 340. If the abnormal state of the task is detected by the task management and control unit 310 of the DN, the application associated with the task is migrated or rebuilt to the another node. If the abnormal state of the application is detected by the application management and control unit 320, the application is migrated or rebuilt to the another node.

Case (2): The DN deletes the BDN in the autonomous domain by using the autonomous domain resource management unit 340, and the autonomous domain computing unit 330 of the DN re-elects the BDN from the candidate nodes. The candidate nodes include a non-DN and non-BDN node in the autonomous domain. If the abnormal state of the task is detected by the task management and control unit 310 of the DN, the application associated with the task is migrated or rebuilt to the another node. If the abnormal state of the application is detected by the application management and control unit 320, the application is migrated or rebuilt to the another node. The autonomous domain data synchronization unit 360 of the DN synchronizes the management statuses and data of the task, the application, the node connection, and/or the resource to the new BDN.

When the edge and the cloud are normally connected, addition of a new node to the autonomous domain includes the following steps.

Step 1: The DN adds a node to the autonomous domain by using the autonomous domain resource management unit 340.

Step 2: The DN completes ECAS deployment of the new node. Because of addition of the new node, the node connection status and a BDN election result are updated in subsequent steps 520 and 530.

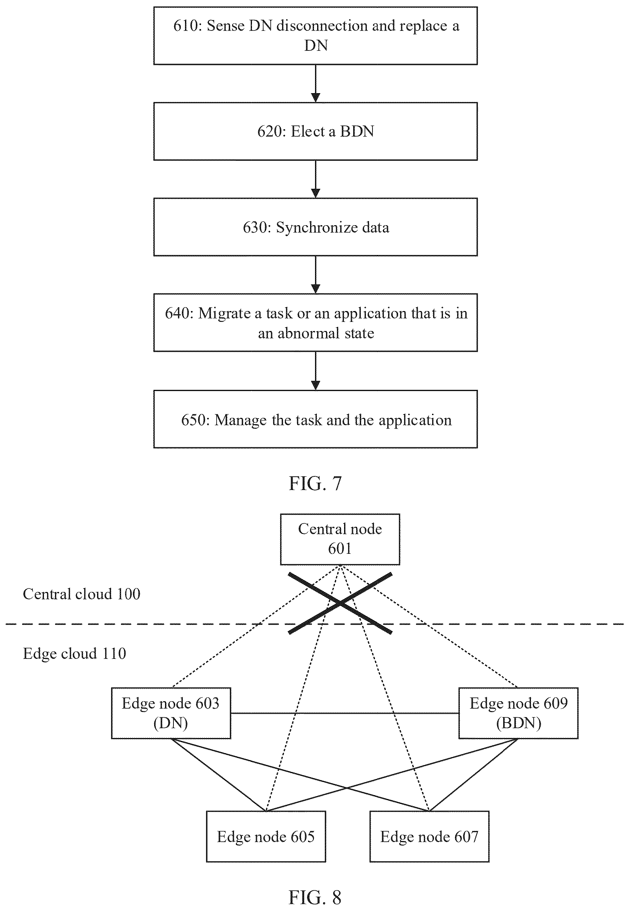

FIG. 7 is an example flowchart of edge node autonomy in a case in which the edge and the cloud are disconnected according to an embodiment of this application. FIG. 8 is a diagram of an application scenario corresponding to FIG. 7. The center/cloud 100 includes a central node 601, and the edge cloud 110 includes an edge node 603, an edge node 605, an edge node 607, and an edge node 609.

610: Sense DN disconnection and replace the DN.

A connection status computing subunit 333 of the non-DN node in the autonomous domain senses that the non-DN node and the DN are disconnected, and the designated node computing subunit 331 is used to upgrade the BDN in the current autonomous domain to the DN, and notify another edge node to elect a new BDN.

620: Elect the BDN.

The designated node computing subunit 331 of the non-DN/BDN edge node performs computation, BDN election is performed based on the candidate nodes, and the status of the autonomous domain enters a disconnected high-level autonomous state. The candidate nodes include the non-DN node in the autonomous domain.

For example, before the edge and the cloud are disconnected, the edge node 603 is the BDN, and the edge node 609 is a common non-BDN and non-DN edge node. As shown in FIG. 8, after the edge and the cloud are disconnected, the edge node 603 is upgraded to the DN, and the edge node 609 is elected to be the BDN.

630: Synchronize data.

The autonomous domain data synchronization unit 360 of the DN (the edge node 603) synchronizes the management statuses and data of the task, the application, the node connection, and/or the resource to the new BDN (the edge node 609).

640: Migrate a task or an application that is in an abnormal state.

The task management and control unit 310 and the application management and control unit 320 of the DN (the edge node 603) respectively perform task management and application management, manage a status of an application related to a deployed task or application, and perform migration or rebuilding if the status is abnormal.

650: Manage the task and the application.

The task management and control unit 310 and the application management and control unit 320 of the DN (the edge node 603) respectively implement task CURD management and control and application CURD management and control, schedule an application associated with the task or an application to a corresponding node, and manage the statuses of the task and the application.

When the edge and the cloud are disconnected, node fault includes the following three cases.

Case (1): A non-DN and non-BDN node in the autonomous domain is faulty, and step 640 is performed.

Case (2): The DN in the autonomous domain is faulty, and steps 610 to 640 are performed.

Case (3): The BDN in the autonomous domain is faulty, and steps 620 to 640 are performed.

When the edge and the cloud are disconnected, node deletion includes the following three cases.

Case (1): The DN deletes the non-BDN and non-DN node in the autonomous domain by using the autonomous domain resource management unit 340, and step 640 is performed.

Case (2): The DN deletes the DN in the autonomous domain by using the autonomous domain resource management unit 340, and steps 610 to 640 are performed.

Case (3): The DN deletes the BDN in the autonomous domain by using the autonomous domain resource management unit 340, and steps 620 to 640 are performed.

Steps of adding a new node to the autonomous domain when the edge and the cloud are disconnected are the same as steps of adding a new node to the autonomous domain when the edge and the cloud are normally connected. Details are not described in this application again.

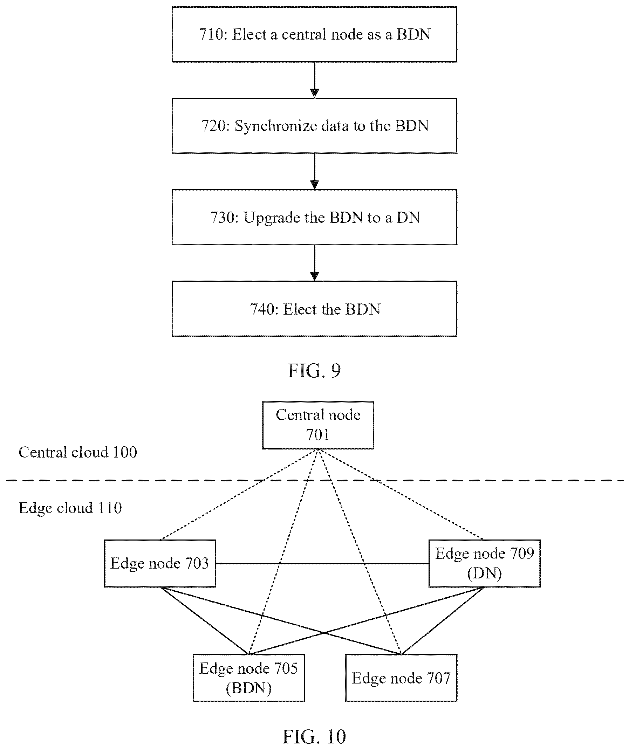

FIG. 9 is an example flowchart of recovering the connection between the edge and the cloud according to an embodiment of this application.

710: Elect the central node as the BDN.

FIG. 10 is a diagram of a scenario in which the edge and the cloud are recovered to an initial connection state according to an embodiment of this application. The center/cloud 100 includes a central node 701, and the edge cloud 110 includes an edge node 703, an edge node 705, an edge node 707, and an edge node 709. When connections between the nodes in the edge cloud 110 and the central node 701 are just recovered, the edge node 709 is the DN, and the edge node 705 is the BDN.

The designated node computing subunit 331 of the BDN (the edge node 705) clears an existing BDN identity, and another non-DN and non-BDN node performs BDN election based on the candidate nodes. In this case, the central node 701 is elected as a new BDN. For example, the edge node 705 may determine, based on a local node connection status, that a connection of the central node 701 has recovered, and then send a packet to other nodes in the autonomous domain, where a byte that is in the packet and that indicates the BDN in this autonomous domain is empty. This indicates that the edge node 705 clears the existing BDN identity and indicates the another non-DN and non-BDN node to perform BDN election.

For example, a priority of the central node 701 may be set to the highest, for example, 255, to ensure that after the connection is recovered, the central node 701 can be elected as the new BDN.

720: Synchronize data to the BDN.

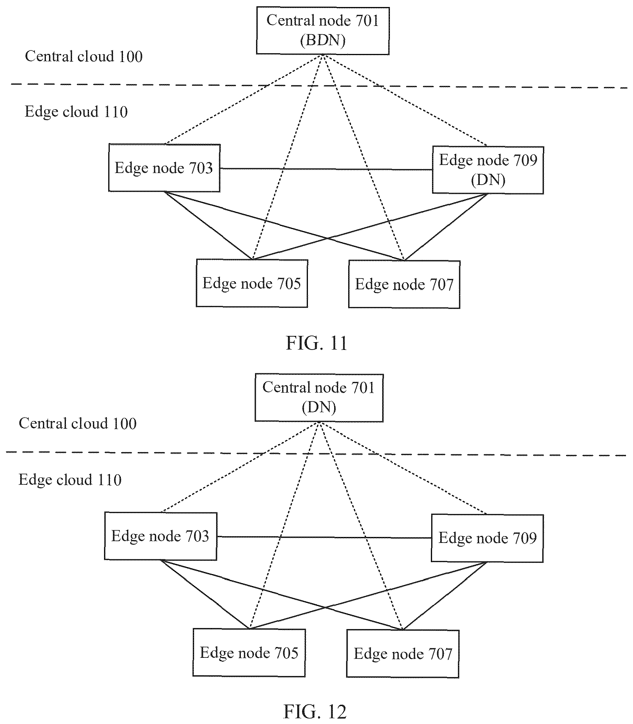

FIG. 11 is a diagram of a scenario in which data synchronization is performed after the connection between the edge and the cloud is recovered according to an embodiment of this application. In this case, the central node 701 is the BDN, and the edge node 709 is the DN.

The autonomous domain data synchronization unit 360 of the DN (the edge node 709) may synchronize the management statuses and data of the task, the application, the node connection, and/or the resource to the BDN (the central node 701). For example, the batch synchronization manner and/or the incremental synchronization manner may be used.

730: Upgrade the BDN to the DN.

FIG. 12 is a diagram of a scenario in which the BDN is upgraded to the DN according to an embodiment of this application. The designated node computing subunit 331 of the DN (the edge node 709) clears the existing DN identity. In this case, the BDN (the central node 701) is upgraded to the DN again, and the new BDN is elected by the another non-DN and non-BDN node.

For example, the edge node 709 may send a packet to other nodes in the autonomous domain, where a byte that is in the packet and that indicates the DN in this autonomous domain is empty. This indicates that the edge node 709 clears an existing DN identity and indicates the another non-DN and non-BDN node to perform BDN election.

740: Elect the BDN.

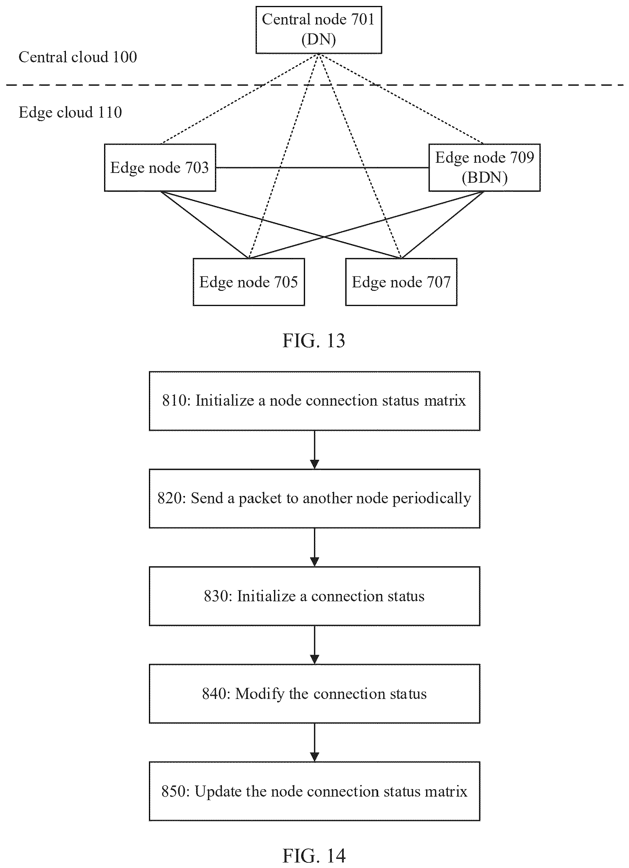

The designated node computing subunit 331 of the non-DN and non-BDN node performs BDN election, and the status of the autonomous domain re-enters a normal connected running state. FIG. 13 is a diagram of a BDN election scenario according to an embodiment of this application. For example, the edge node 709 is elected as the new BDN.

For a running condition after the status of the autonomous domain enters the normal connected running state, refer to descriptions in FIG. 5. Details are not described again in this application.

It should be understood that, a process in which the central node 701 is re-elected as the DN after the disconnection is recovered described in FIG. 7 is merely an example. Alternatively, the edge node 705 may clear a BDN identity of the edge node 705 and then directly notify another node that the new BDN in the autonomous domain is the central node 701. For example, the edge node 705 sends a packet to other nodes in the autonomous domain, where a byte that is in the packet and that indicates the BDN in the autonomous domain include an ID of the central node 701. Alternatively, the edge node 709 may clear a DN identity of the edge node 709 and then directly notify another node that a new DN in the autonomous domain is the central node 701. For example, the edge node 709 sends a packet to other nodes in the autonomous domain, where a byte that is in the packet and that indicates the DN in the autonomous domain includes the ID of the central node 701, and then the BDN synchronizes data to the new DN (the central node 701). The specific process should not be understood as a limitation on this application.

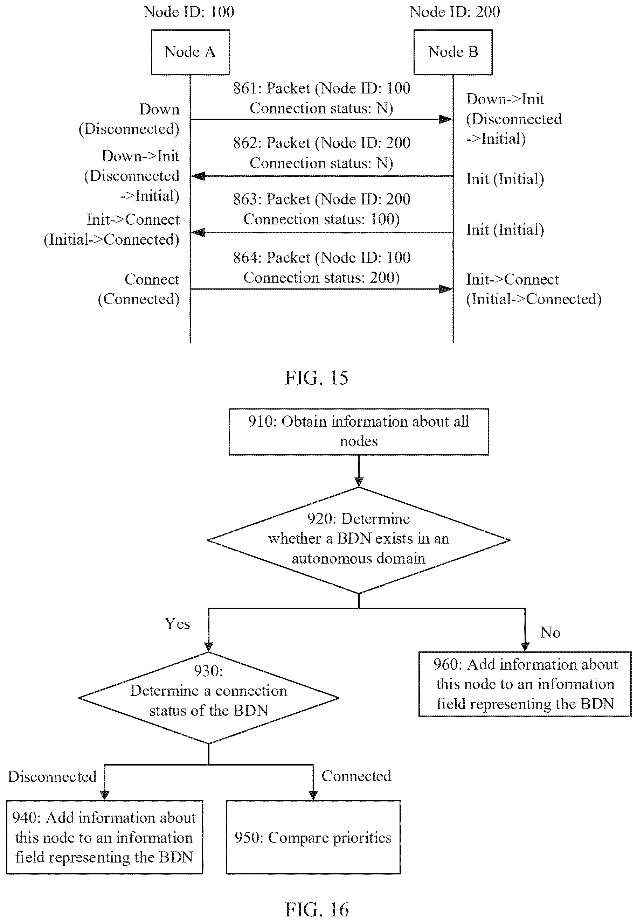

FIG. 14 is an example flowchart of computation of a node connection status according to an embodiment of this application. FIG. 15 is a diagram of an application scenario of computation of the node connection status corresponding to FIG. 14. In this embodiment of this application, a specific procedure of computation of the node connection status is described in detail by using information exchange between a node A and a node B. The node A and the node B may be edge nodes or may be central nodes. Specific types of the node A and the node B are not limited in this application.

810: Initialize a node connection status matrix.

Each node in the autonomous domain stores information of network connections between this node and all nodes in the autonomous domain. For example, the node may store the information of the network connections between this node and all nodes in the autonomous domain by using the connection status matrix. Optionally, the information of the network connections between this node and all nodes in the autonomous domain may alternatively be stored in a manner such as a network connection list or a bit string.

For example, the node may initialize the node connection status matrix when the node is just added to the autonomous domain. For example, in the matrix, 0 indicates that a connection status is a disconnected (Down) state, and 1 indicates that the connection status is a connected (Connect) state. In the matrix initialized by the node, statuses of connections to nodes different from the node are all 0. For example, the node A is an edge node, and Table 1 is a node connection status matrix initialized by the node A.

**Table 1**

| | Central node | Edge node A | Edge node B | Edge node C | Edge node D |
|---|---|---|---|---|---|
| Edge node A | 0 | 1 | 0 | 0 | 0 |

820: Send a packet to another node periodically.

A node in the autonomous domain periodically sends a connection hello packet to another node. A sending interval may be set. For example, the node sends the hello packet to the another node every 60 s.

For example, as shown in 861 in FIG. 15, the node A sends the hello packet to the node B, where the hello packet includes an ID of a packet sender (the node A) and a connection status (Connected), and N (null) of the connection status indicates that a connection is not established between the node A and the node B. In this case, a connection status of the node B changes from a disconnected state to an initial state (Down->Init).

830: Initialize the connection status.

A node in the autonomous domain receives a hello packet from a corresponding node, but a connection status (Connected) in the packet does not include a node ID of this node, and the connection status changes to an initial state (Init).

For example, as shown in 862 in FIG. 15, the node A receives a hello packet sent by the node B, where the hello packet includes an ID of a packet sender (the node B) and a connection status (Connected), and N in a connection list indicates that a connection is not established between the node B and the node A. In this case, a connection status of the node A changes from a disconnected state to an initial state (Down->Init).

840: Modify the connection status.

A node in the autonomous domain receives a hello packet from a corresponding node and finds that this node (Node ID) exists in connected nodes. The connection status changes to a connected state (Connect).

For example, as shown in 863 in FIG. 15, the node A receives the hello packet sent by the node B, where the hello packet includes the ID of the packet sender (the node B) and the connection status (Connected), the node A determines that the connection status includes the ID (100) of the node A, and the connection status of the node A changes from the initial state to the connected state (Init->Connect).

For example, as shown in 864 in FIG. 15, the node B receives the hello packet sent by the node A, where the hello packet includes the ID of the packet sender (the node A) and the connection status (Connected), the node B determines that the connection status includes the ID (200) of the node B, and the connection status of the node B changes from the initial state to a connected state (Init->Connect).

850: Update the node connection status matrix.

A node in the autonomous domain updates the node connection status matrix based on a connection status between this node and another node. For example, Table 1 is an updated node connection status matrix of the node A.

**Table 2**

| | Central node | Edge node A | Edge node B | Edge node C | Edge node D |
|---|---|---|---|---|---|
| Edge node A | 1 | 1 | 1 | 1 | 1 |

FIG. 16 is an example flowchart of BDN election according to an embodiment of this application.

910: Obtain information about all nodes.

Information, about all nodes in the autonomous domain, stored on this node is obtained. The central node has the highest priority (for example, 255), and a node whose priority is 0 does not participate in election. It should be understood that, in addition to the central node, if the BDN already exists in the autonomous domain, a node that is newly added or recovered to enter the autonomous domain does not become the BDN.

It should be understood that a priority of a node may be related to factors such as a geographical location and a computing capability of the node.

920: Determine whether the autonomous domain has the BDN.

After a connection is established between this node and another node, this node may perform BDN election. This node listens to a received hello packet, and determines whether this autonomous domain has the BDN based on the hello packet. If the autonomous domain already has the BDN, step 930 is performed; or if the autonomous domain has no BDN, step 960 is performed.

For example, bytes 16 to 20 of the hello packet indicate BDN information in the autonomous domain. If the bytes are not empty, it indicates that the autonomous system has the BDN; or if the bytes are empty, it indicates that the autonomus domain has no BDN.

930: Determine a connection status of the BDN.

If a connection status between this node and the BDN is a disconnected state, step 940 is performed. If a connection status between this node and the BDN is a connected state (not disconnected), step 950 is performed.

Optionally, if it is determined that the BDN is disconnected from all other nodes, step 940 is performed; or if it is determined that the BDN is not disconnected from all other nodes, step 950 is performed.

940: Add information about this node to an information field representing the BDN.

BDN information in the received packet is removed, and the information about this node is added to the information field representing the BDN, where the information about this node may include an ID and a priority of this node.

For example, bytes 16 to 20 of a hello packet represent the BDN information in the autonomous domain, and bytes 16 to 20 in a hello packet sent by this node to other nodes include the information about this node.

950: Compare priorities.

Compare the priority of this node with a priority of the BDN in the received packet. If the priority of this node is higher, the current BDN is replaced. If the priority of this node is equal to that of the BDN, an ID value of this node is compared with an ID value of the BDN. If the ID value of this node is greater than that of the BDN, the current BDN is replaced with this node.

For example, the bytes 16 to 20 of the hello packet represent the BDN information in the autonomous domain, and the bytes 16 to 20 in the hello packet sent by this node to other nodes include the information about this node.

Optionally, a replacement operation may be performed when the ID value of this node is less than the ID value of the BDN. The replacement policy is merely an example, and should not be understood as a limitation on this application.

960: Add the information about this node to the information field representing the BDN.

For example, information about the ID and the priority of this node may be added to the information field representing the BDN in the hello packet, and the hello packet is sent to other nodes.

It should be understood that a DN election process in this embodiment of this application is basically the same as the foregoing BDN election process, and a corresponding BDN data field is changed to a DN data field. Details are not described in this application again.

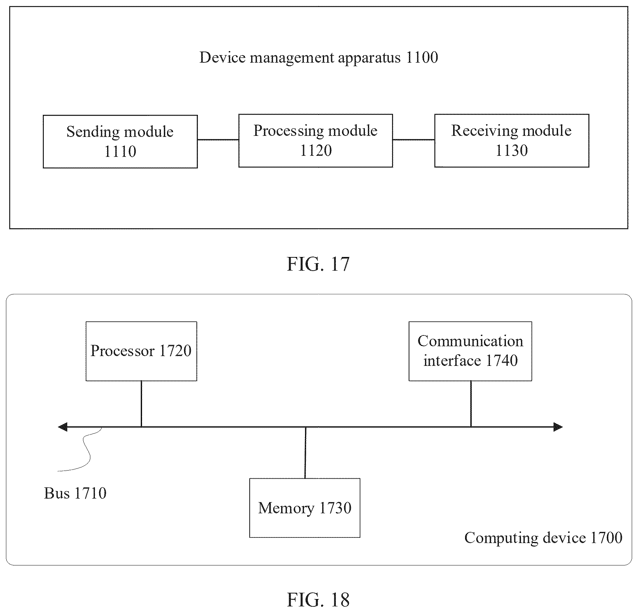

The foregoing describes, in detail with reference to FIG. 1 to FIG. 16, the device management method provided in embodiments of this application. The following describes apparatus embodiments of this application in detail with reference to FIG. 17 to FIG. 20. It should be understood that descriptions of the method embodiments correspond to descriptions of the apparatus embodiments. Therefore, for a part that is not described in detail, refer to the foregoing method embodiments.

FIG. 17 is a block diagram of a device management apparatus according to an embodiment of this application. It should be understood that the device management apparatus shown in FIG. 17 may be considered as another example of the device management apparatus 300, and specific unit division should not be understood as a limitation on this application.

The device management apparatus 1100 may be implemented by using software, hardware, or a combination of hardware and software. The device management apparatus 1100 provided in this embodiment of this application may implement the method procedures shown in FIG. 4 to FIG. 16 in embodiments of this application. The device management apparatus 1100 includes a sending module 1110, a processing module 1120, and a receiving module 1130. The device management apparatus 1100 may be used in a device management system. The device management system includes a first device, a second device, and at least one third device. The first device is configured to manage the second device and the at least one third device. The second device includes data backup of the first device. The device management apparatus 1100 is disposed in the second device. The processing module 1120 is configured to determine that the first device is in an abnormal state. The sending module 1110 is configured to send a first packet to the at least one third device, where the first packet indicates that the second device manages the at least one third device.

Optionally, the sending module 1110 is further configured to send a second packet to the at least one third device, where the second packet indicates to elect a fourth device from the at least one third device, and the fourth device is configured to back up data of the second device.

Optionally, the processing module 1120 is further configured to synchronize the data of the second device to the fourth device.

Optionally, the processing module 1120 is further configured to: determine that a first task is in an abnormal state, where the first task is executed by at least one application of at least one fifth device, and the fifth device is the second device or any one device in the at least one third device; and migrate or rebuild the first task.

Optionally, the device management apparatus 1100 further includes the receiving module 1130 configured to receive a third packet from a sixth device, where the sixth device is the first device or any one device in the at least one third device, and the third packet indicates a network connection condition between the sixth device and the second device; and the processing module 1120 further configured to update a network connection status of the second device based on the third packet.

Optionally, the processing module 1120 is specifically configured to: if the third packet indicates that a connection is not established between the sixth device and the second device, update the network connection status of the second device to an initial state; or if the third packet indicates that a connection is established between the sixth device and the second device, update the network connection status of the second device to a connected state.

Optionally, the processing module 1120 is further configured to update a connection status matrix of the second device based on the third packet, where the connection status matrix includes information of a network connection between the second device and the sixth device.

Optionally, the processing module 1120 is further configured to determine that the first device is recovered to a normal state, where the first device is a central device. The processing module 1120 is further configured to synchronize the data of the second device to the first device. The sending module 1110 is further configured to send a fourth packet to the at least one third device, where the fourth packet indicates that the second device no longer manages the at least one third device.

Optionally, a priority of the first device is higher than a priority of the second device, and the priority of the first device is higher than a priority of any third device in the at least one third device.

Optionally, the priority of the second device is greater than or equal to the priority of any third device in the at least one third device.

Optionally, if a priority of a seventh device is equal to the priority of the second device, an ID value of the seventh device is less than an ID value of the second device, and the seventh device is any one device in the at least one third device.

It should be understood that the device management apparatus 1100 herein may be embodied in a form of a functional module. The term "module" herein may be implemented in a form of software and/or hardware, and this is not specifically limited.

For example, the "module" may be a software program, a hardware circuit, or a combination thereof that implements the foregoing functions. For example, the following uses the sending module 1110 as an example to describe an implementation of the sending module 1110. Similarly, for implementations of other modules, such as the processing module 1120 and the receiving module 1130, refer to the implementation of the sending module 1110.

The module is used as an example of a software functional unit, and the sending module 1110 may include code run on a computing instance. The computing instance may include at least one of a physical host (a computing device), a virtual machine, and a container. Further, there may be one or more computing instances. For example, the sending module 1110 may include code run on a plurality of hosts/virtual machines/containers. It should be noted that, a plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same virtual private cloud (virtual private cloud, VPC), or may be distributed on a plurality of VPCs. Generally, one VPC is set in one region. A communication gateway needs to be set in each VPC for communication between two VPCs in a same region and cross-region communication between VPCs in different regions. The VPCs are interconnected through the communication gateway.

The module is used as an example of a hardware functional unit, and the sending module 1110 may include at least one computing device, such as a server. Alternatively, the sending module 1110 may be a device implemented by using an application-specific integrated circuit (application-specific integrated circuit, ASIC), a programmable logic device (programmable logic device, PLD), or the like. The PLD may be implemented by using a complex programmable logical device (complex programmable logical device, CPLD), a field-programmable gate array (field-programmable gate array, FPGA), a generic array logic (generic array logic, GAL), or any combination thereof.

A plurality of computing devices included in the sending module 1110 may be distributed in a same region, or may be distributed in different regions. The plurality of computing devices included in the sending module 1110 may be distributed in a same AZ, or may be distributed in different AZs. Similarly, the plurality of computing devices included in the sending module 1110 may be distributed in a same VPC, or may be distributed in multiple VPCs. The plurality of computing devices may be any combination of computing devices such as a server, an ASIC, a PLD, a CPLD, an FPGA, and a GAL.

Therefore, modules in the examples described in embodiments of this application can be implemented by using electronic hardware or a combination of computer software and electronic hardware. Whether these functions are implemented by hardware or software depends on particular applications and design constraints of the technical solutions. A person skilled in the art may use different methods to implement the described functions for each particular application, but it should not be considered that the implementation goes beyond the scope of this application.

It should be noted that, when the device management apparatus provided in the foregoing embodiment performs the device management method, division into the foregoing functional modules is merely used as an example for description. In actual application, the foregoing functions may be allocated to different functional modules for implementation as required, that is, an internal structure of the apparatus is divided into different functional modules, to implement all or some of the functions described above. For example, the sending module 1110 may be configured to perform any step in the device management method, the processing module 1120 may be configured to perform any step in the device management method, and the receiving module 1130 may be configured to perform any step in the device management method. Steps implemented by the sending module 1110, the processing module 1120, and the receiving module 1130 may be specified as required. The sending module 1110, the processing module 1120, and the receiving module 1130 respectively implement different steps in the device management method to implement all functions of the device management apparatus.

In addition, the device management apparatus provided in the foregoing embodiment and the foregoing device management method embodiments belong to a same concept. For specific implementation processes thereof, refer to the foregoing method embodiments. Details are not described herein.

The device management method provided in embodiments of this application may be performed by a computing device, and the computing device may also be referred to as a computer system. The computer system includes a hardware layer, an operating system layer running above the hardware layer, and an application layer running above the operating system layer. The hardware layer includes hardware such as a processing unit, a memory, and a memory control unit. Subsequently, functions and structures of the hardware are described in detail. The operating system is any one or more types of computer operating systems that implement service processing by using a process (process), for example, a Linux operating system, a Unix operating system, an Android operating system, an iOS operating system, or a Windows operating system. The application layer includes applications such as a browser, a contacts, word processing software, and instant messaging software. In addition, optionally, the computer system is a handheld device such as a smartphone, or a terminal device such as a personal computer. This is not specifically limited in this application, provided that the method provided in embodiments of this application can be implemented. The device management method provided in embodiments of this application may be performed by a computing device or a functional module that is in the computing device and that can invoke and execute a program.

The following describes, in detail with reference to FIG. 18, a computing device provided in an embodiment of this application.

FIG. 18 is a diagram of an architecture of a computing device according to an embodiment of this application. The computing device 1700 may be a server, a computer, or another device with a computing capability. The computing device 1700 shown in FIG. 18 includes a processor 1720, a memory 1730, a communication interface 1740, and a bus 1710. The processor 1720, the memory 1730, and the communication interface 1740 communicate with each other through the bus 1710. The computing device 1700 may be a server or a terminal device. It should be understood that quantities of processors and memories in the computing device 1700 are not limited in this application.

The bus 1710 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is indicated by using only one line in FIG. 18. However, it does not indicate that there is only one bus or only one type of bus. The bus 1710 may include a path for transferring information between components (for example, the memory 1730, the processor 1720, and the communication interface 1740) of the computing device 1700.

The processor 1720 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1730 may include a volatile memory (volatile memory), for example, a random access memory (random access memory, RAM). The processor 104 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1730 stores executable program code, and the processor 1720 executes the executable program code to separately implement functions of the sending module 1110, the processing module 1120, and the receiving module 1130, to implement the device management method described in the foregoing embodiments. That is, the memory 1730 stores instructions used to perform the device management method described in the foregoing embodiments.

Alternatively, the memory 1730 stores executable program code, and the processor 1720 executes the executable program code to separately implement functions of the sending module 1110, the processing module 1120, and the receiving module 1130, to implement the device management method described in the foregoing embodiments. That is, the memory 1730 stores instructions used to perform the device management method described in the foregoing embodiments.

The communication interface 1740 uses a transceiver module, for example, but not limited to, a network interface card or a transceiver, to implement communication between the computing device 1700 and another device or a communication network.

The listed structure of the computing device 1700 is merely an example for description, and this application is not limited thereto. The computing device 1700 in this embodiment of this application includes various types of hardware in a computer system in the conventional technology. For example, the computing device 1700 further includes a memory other than the memory 1730, for example, a magnetic disk storage. A person skilled in the art should understand that the computing device 1700 may further include another component necessary for implementing normal running. In addition, a person skilled in the art should understand that, based on a specific requirement, the computing device 1700 may further include a hardware component for implementing another additional function. In addition, a person skilled in the art should understand that the computing device 1700 may alternatively include only a component necessary for implementing embodiments of this application, and not necessarily include all the components shown in FIG. 18.

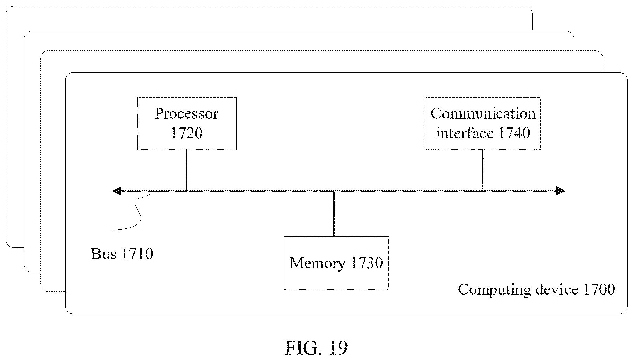

FIG. 19 is a diagram of an architecture of a computing device cluster according to an embodiment of this application.

The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 19, the computing device cluster includes at least one computing device 1700. A memory 1730 in one or more computing devices 1700 in the computing device cluster may store same instructions used to perform the device management method described in the foregoing embodiments.

In some possible implementations, alternatively, a memory 1730 in one or more computing devices 1700 in the computing device cluster may separately store some instructions used to perform the device management method described in the foregoing embodiments. In other words, a combination of the one or more computing devices 1700 may jointly execute instructions used to perform the device management method described in the foregoing embodiments.

It should be noted that memories 1730 in different computing devices 1700 in the computing device cluster may store different instructions that are respectively used to perform some functions of the computing devices 1700. In other words, instructions stored in the memories 1730 in the different computing devices 1700 may implement functions of one or more modules of the sending module 1110, the processing module 1120, and the receiving module 1130.

Alternatively, the memories 1730 in the different computing devices 1700 in the computing device cluster may store different instructions that are respectively used to perform some functions of the device management apparatus 1100. In other words, instructions stored in the memories 1730 in the different computing devices 1700 may implement functions of one or more modules of the sending module 1110, the processing module 1120, and the receiving module 1130.

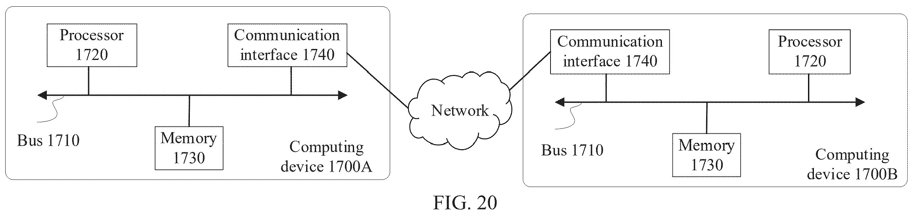

In some possible implementations, one or more computing devices in the computing device cluster may be connected via a network. The network may be a wide area network, a local area network, or the like. FIG. 20 shows a possible implementation. FIG. 20 is a diagram in which computing devices 1700A and 1700B are connected via a network according to an embodiment of this application. The two computing devices 1700A and 1700B are connected to each other via the network. Specifically, each computing device is connected to the network through a communication interface of the computing device. In this type of possible implementation, a memory 1730 in the computing device 1700A stores instructions for implementing functions of the sending module 1110 and the receiving module 1130. In addition, a memory 1730 in the computing device 1700B stores instructions for implementing functions of the processing module 1120.

A connection manner between computing device clusters shown in FIG. 20 may be based on a consideration that in the device management method provided in this application, a large amount of data needs to be synchronized to a BDN or a large quantity of nodes need to be managed, and therefore, it is considered that functions implemented by the processing module 1120 are performed by the computing device 1700B.

It should be understood that functions of the computing device 1700A shown in FIG. 20 may alternatively be implemented by a plurality of computing devices 1700. Similarly, the functions of the computing device 1700B may alternatively be implemented by the plurality of computing devices 1700.

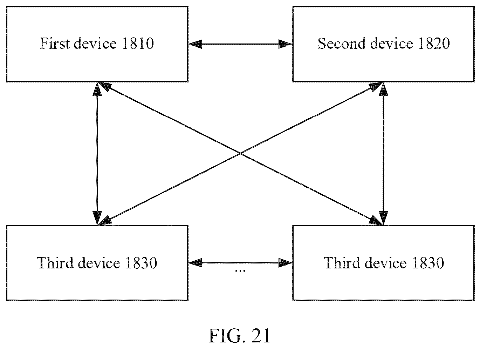

FIG. 21 is a block diagram of a device management system according to an embodiment of this application.

The device management system includes a first device 1810, a second device 1820, and at least one third device 1830. The first device 1810, the second device 1820, and the at least one third device 1830 may all be implemented in a manner of hardware and software. The first device 1810 is configured to perform the method performed by the first device or the DN in the foregoing embodiments, the second device 1820 is configured to perform the method performed by the second device or the BDN in the foregoing embodiments, and the third device 1830 is configured to perform the method performed by the third device or the non-DN/BDN node in the foregoing embodiments.

In this embodiment, a computer program product including instructions is further provided. The computer program product may be software or a program product that includes instructions and that can be run on a computing device or be stored in any usable medium. When the computer program product is run on at least one computing device, the computing device is enabled to perform the device management method provided above, or the computing device is enabled to implement functions of the device management apparatus 1100 provided above.

In this embodiment, a computer program product including instructions is further provided. The computer program product may be software or a program product that includes instructions and that can be run on a computing device cluster or be stored in any usable medium. When the computer program product is run by the computing device cluster, the computing device cluster is enabled to perform the device management method provided above, or the computing device cluster is enabled to implement the functions of the device management apparatus 1100 provided above.

In this embodiment, a computer-readable storage medium is further provided. The computer-readable storage medium may be any usable medium that can be stored by the computing device, or a data storage device such as a data center including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. When the instructions in the computer-readable storage medium are executed on the computing device, the computing device is enabled to perform the device management method provided above.

In this embodiment, the computer-readable storage medium is further provided. The computer-readable storage medium may be any usable medium that can be stored by the computing device, or the data storage device such as the data center including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. When the instructions in the computer-readable storage medium are executed by the computer device cluster, the computer device cluster is enabled to perform the device management method provided above.

It should be understood that, in various embodiments of this application, sequence numbers of the foregoing processes do not mean execution sequences. The execution sequences of the processes should be determined based on functions and internal logic of the processes, and should not be construed as any limitation on the implementation processes of embodiments of this application.

A person of ordinary skill in the art may be aware that example units and algorithm steps described with reference to embodiments disclosed in this specification may be implemented by electronic hardware or a combination of computer software and electronic hardware. Whether these functions are implemented by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing device, apparatus and computing device cluster, refer to the corresponding processes in the foregoing method embodiments. Details are not described herein again.

In several embodiments provided in this application, it should be understood that the disclosed method, apparatus, and device may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A device management method, applied to a device management system, wherein the device management system comprises a first device, a second device, and at least one third device, the first device is configured to manage the second device and the at least one third device, the second device comprises data backup of the first device, the method is performed by the second device or a device management apparatus disposed in the second device, and the method comprises:
determining that the first device is in an abnormal state; and
sending a first packet to the at least one third device, wherein the first packet indicates that the second device manages the at least one third device.

2. The method according to claim 1, wherein the method further comprises:
sending a second packet to the at least one third device, wherein the second packet indicates to elect a fourth device from the at least one third device, and the fourth device is configured to back up data of the second device.

3. The method according to claim 2, wherein the method further comprises:
synchronizing the data of the second device to the fourth device.

4. The method according to any one of claims 1 to 3, wherein the method further comprises:
determining that a first task is in an abnormal state, wherein the first task is executed by at least one application of at least one fifth device, and the fifth device is the second device or any one device in the at least one third device; and
migrating or re-building the first task.

5. The method according to any one of claims 1 to 4, wherein the method further comprises:
receiving a third packet from a sixth device, wherein the sixth device is the first device or any one device in the at least one third device, and the third packet indicates a network connection condition between the sixth device and the second device; and
updating a network connection status of the second device based on the third packet.

6. The method according to claim 5, wherein updating the network connection status of the second device based on the third packet comprises:
if the third packet indicates that a connection is not established between the sixth device and the second device, updating the network connection status of the second device to an initial state; or
if the third packet indicates that a connection is established between the sixth device and the second device, updating the network connection status of the second device to a connected state.

7. The method according to claim 5 or 6, wherein the method further comprises:
updating a connection status matrix of the second device based on the third packet, wherein the connection status matrix comprises information of a network connection between the second device and the sixth device.

8. The method according to any one of claims 1 to 7, wherein the method further comprises:
determining that the first device is recovered to a normal state, wherein the first device is a central device;
synchronizing the data of the second device to the first device; and
sending a fourth packet to the at least one third device, wherein the fourth packet indicates that the second device no longer manages the at least one third device.

9. The method according to claim 8, wherein a priority of the first device is higher than a priority of the second device, and the priority of the first device is higher than a priority of any third device in the at least one third device.

10. The method according to any one of claims 1 to 9, wherein the priority of the second device is greater than or equal to the priority of any third device in the at least one third device.

11. The method according to claim 10, wherein if a priority of a seventh device is equal to the priority of the second device, an identifier ID value of the seventh device is less than an ID value of the second device, and the seventh device is any one device in the at least one third device.

12. A device management apparatus, used in a device management system, wherein the device management system comprises a first device, a second device, and at least one third device, the first device is configured to manage the second device and the at least one third device, the second device comprises data backup of the first device, the apparatus is disposed in the second device, and the apparatus comprises:
a processing module, configured to determine that the first device is in an abnormal state; and
a sending module, configured to send a first packet to the at least one third device, wherein the first packet indicates that the second device manages the at least one third device.

13. The apparatus according to claim 12, wherein the sending module is further configured to send a second packet to the at least one third device, wherein the second packet indicates to elect a fourth device from the at least one third device, and the fourth device is configured to back up data of the second device.

14. The apparatus according to claim 13, wherein the processing module is further configured to synchronize the data of the second device to the fourth device.

15. The apparatus according to any one of claims 12 to 14, wherein the processing module is further configured to:
determine that a first task is in an abnormal state, wherein the first task is executed by at least one application of at least one fifth device, and the fifth device is the second device or any one device in the at least one third device; and
migrate or re-build the first task.

16. The apparatus according to any one of claims 12 to 15, further comprising a receiving module, configured to receive a third packet from a sixth device, wherein the sixth device is the first device or any one device in the at least one third device, and the third packet indicates a network connection condition between the sixth device and the second device; and
the processing module is further configured to update a network connection status of the second device based on the third packet.

17. The apparatus according to claim 16, wherein the processing module is specifically configured to:
if the third packet indicates that a connection is not established between the sixth device and the second device, update the network connection status of the second device to an initial state; or
if the third packet indicates that a connection is established between the sixth device and the second device, update the network connection status of the second device to a connected state.

18. The apparatus according to claim 16 or 17, wherein the processing module is further configured to update a connection status matrix of the second device based on the third packet, wherein the connection status matrix comprises information of a network connection between the second device and the sixth device.

19. The apparatus according to any one of claims 12 to 18, wherein
the processing module is further configured to determine that the first device is recovered to a normal state, wherein the first device is a central device;
the processing module is further configured to synchronize the data of the second device to the first device; and
the sending module is further configured to send a fourth packet to the at least one third device, wherein the fourth packet indicates that the second device no longer manages the at least one third device.

20. The apparatus according to claim 19, wherein a priority of the first device is higher than a priority of the second device, and the priority of the first device is higher than a priority of any third device in the at least one third device.

21. The apparatus according to any one of claims 12 to 20, wherein the priority of the second device is greater than or equal to the priority of any third device in the at least one third device.

22. The apparatus according to claim 21, wherein if a priority of a seventh device is equal to the priority of the second device, an ID value of the seventh device is less than an ID value of the second device, and the seventh device is any one device in the at least one third device.

23. A computing device cluster, comprising at least one computing device, wherein each computing device comprises a processor and a memory; and
the processor of the at least one computing device is configured to execute instructions stored in the memory of the at least one computing device, so that the computing device cluster is enabled to perform the method according to any one of claims 1 to 11.

24. A computer-readable storage medium, comprising computer program instructions, wherein when the computer program instructions are executed by a computing device cluster, the computing device cluster performs the method according to any one of claims 1 to 11.
